# EUROPEAN PATENT APPLICATION

(11) **EP 4 661 578 A1**
(43) Date of publication of application: **10.12.2025**
(21) Application number: 23919800.5
(22) Date of filing: 03.02.2023
(51) Int. Cl.: H04W 74/08, H04W 72/21

(54) **USER EQUIPMENT**

(71) Applicant: NTT DOCOMO, INC., Tokyo 100-6150 (JP)
(72) Inventor: YOSHIOKA Shohei, Tokyo 100-6150 (JP); HARADA Hiroki, Tokyo 100-6150 (JP); NAGATA Satoshi, Tokyo 100-6150 (JP); WANG Jing, Beijing 100190 (CN); YOU Luhua, Beijing 100190 (CN)
(74) Representative: Hoffmann Eitle
(86) International application number: PCT/JP2023/003676
(87) International publication number: WO 2024/161663

(57) **Abstract**

A terminal includes: a transmitting unit that performs repeated transmission of a physical uplink control channel in response to a conflict resolution message in a random access procedure; and a control unit that identifies more than 16 resources for the repeated transmission indicated by configuration information transmitted from a base station, based on the configuration information.

## Description

### TECHNICAL FIELD

The present disclosure relates to a terminal which performs repeated transmission.

### BACKGROUND ART

The 3rd Generation Partnership Project (3GPP) has prepared a specification for the 5th generation mobile communication system (also referred to as 5G, New Radio (NR), or Next Generation (NG)), and further a specification for a next-generation mobile communication system referred to as Beyond 5G, 5G Evolution, or 6G is also being prepared.

3GPP discusses coverage improvement of a Non-Terrestrial Network (NTN). The NTN is a network including a relay station such as a satellite, and a terminal (User Equipment, UE) can communicate with a base station (next Generation NodeB, gNB) via the relay station.

In the above discussion, 3GPP specifies repeated transmission of a physical uplink control channel (PUCCH) in response to a conflict resolution message (Msg4) in a random access procedure. Specifically, 3GPP specifies that when one repetition factor is configured as the number of repetition, the repetition factor is used, and when a plurality of repetition factors are configured as the number of repetitions, one repetition factor is dynamically indicated (Non-Patent Literature 1).

### CITATION LIST

### NON-PATENT LITERATURE

Non-Patent Literature 1: "Chair's notes RAN1", 3GPP TSG RAN WG1 #111, 3GPP, November 14th - 18th, 2022

### SUMMARY OF INVENTION

Further, 16 resources have been available as one resource set for transmission of the PUCCH in response to the Msg4. However, in a wide range of cells such as a NTN, especially when repeated transmission is applied, the number of available resources has been insufficient and the number of users who can start data communication has been limited. Further, when the number of available resources is increased, there has been an issue for the UE regarding how to identify the resources.

Therefore, the present disclosure has been made in view of this kind of situation, and an object of the present disclosure is to provide a terminal which can identify more than 16 resources allocated for repeated transmission of the PUCCH in response to the Msg4.

One aspect of the present disclosure provides a terminal including: a transmitting unit (radio signal transmission and reception unit 210) that performs repeated transmission of a physical uplink control channel in response to a conflict resolution message in a random access procedure; and a control unit (control unit 270) that identifies more than 16 resources for the repeated transmission indicated by configuration information transmitted from a base station, based on the configuration information.

### BRIEF DESCRIPTION OF THE DRAWINGS

[FIG. 1] FIG. 1 is an overall schematic configuration diagram of a radio communication system.
[FIG. 2] FIG. 2 is a diagram showing a frequency range used in the radio communication system.
[FIG. 3] FIG. 3 is a diagram showing configuration examples of radio frames, subframes, slots, and symbols used in the radio communication system.
[FIG. 4] FIG. 4 is a functional block diagram of a terminal.
[FIG. 5] FIG. 5 is a diagram showing a random access procedure.
[FIG. 6] FIG. 6 is a functional block diagram of a base station.
[FIG. 7] FIG. 7 is a diagram showing a terminal transmitting information related to repeated transmission.
[FIG. 8] FIG. 8 is a diagram showing frequency hopping (FH) configuration/indication performed by a base station.
[FIG. 9] FIG. 9 is a diagram showing FH configuration/indication performed by a terminal.
[FIG. 10] FIG. 10 is a diagram showing a conventional PUCCH resource set.
[FIG. 11] FIG. 11 is a diagram showing a plurality of PUCCH resource sets.
[FIG. 12] FIG. 12 is a diagram showing a configuration example of a PUCCH resource set.
[FIG. 13] FIG. 13 is a diagram showing a configuration example of a PUCCH resource set.
[FIG. 14] FIG. 14 is a diagram showing a configuration example of a PUCCH resource set.
[FIG. 15] FIG. 15 is a diagram showing an example of a hardware configuration of a base station and a terminal.
[FIG. 16] FIG. 16 is a diagram showing a configuration example of a vehicle.

### DESCRIPTION OF EMBODIMENTS

An embodiment will be explained below with reference to the accompanying drawings. Note that the same or similar reference numerals have been attached to the same functions and configurations, and the description thereof will be omitted as appropriate.

### (1) Overall schematic configuration of radio communication system

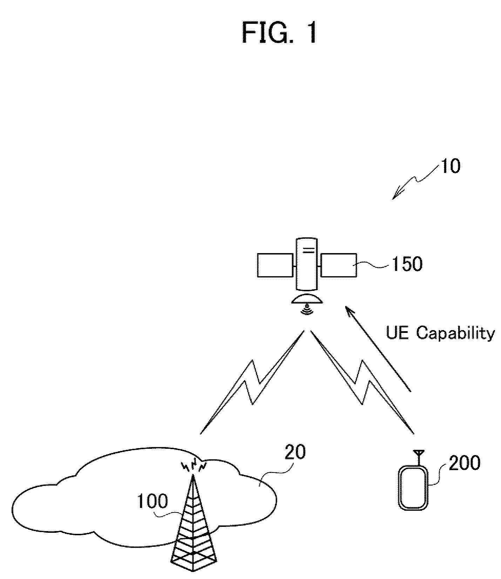

A radio communication system 10 shown in FIG. 1 is compliant with a method referred to as 5G. Meanwhile, the radio communication system 10 may be compliant with a method referred to as Beyond 5G, 5G Evolution, or 6G.

The radio communication system 10 can support Massive Multiple-Input Multiple-Output (Massive MIMO) generating a beam with higher directivity by controlling radio signals transmitted from a plurality of antenna elements, carrier aggregation (CA) bundling and using a plurality of component carriers (CCs), dual connectivity (DC) simultaneously communicating with two base stations, and the like.

As shown in FIG. 1, the radio communication system 10 includes a Next Generation-Radio Access Network (NG-RAN) 20, a base station (next Generation NodeB, gNB)100 connected to the NG-RAN 20, and a terminal (User Equipment, UE) 200 which performs radio communication with the gNB 100. The NG-RAN 20 is connected to a core network (CN) (not shown). The NG-RAN 20 and the CN may simply be expressed as a "network". Further, it can be interpreted that the gNB 100 is included in a network. A specific configuration of the radio communication system 10, for example, the number of the gNB 100 and the UE 200 is not limited to an example shown in FIG. 1.

The radio communication system 10 of an embodiment includes a relay station 150 which relays communication between the gNB 100 and the UE 200. The relay station 150 is a satellite such as a Geostationary Earth Orbit (GEO) satellite, a Middle Earth Orbit (MEO) satellite, or a Low Earth Orbit (LEO) satellite. Further, the relay station 150 may be a High Altitude Platform Station (HAPS) mounted on an airship or balloon, or a commercial aircraft (Air to Ground, ATG). The relay station 150 of the embodiment is assumed to be a flying object as described above, but the relay station 150 is not limited thereto.

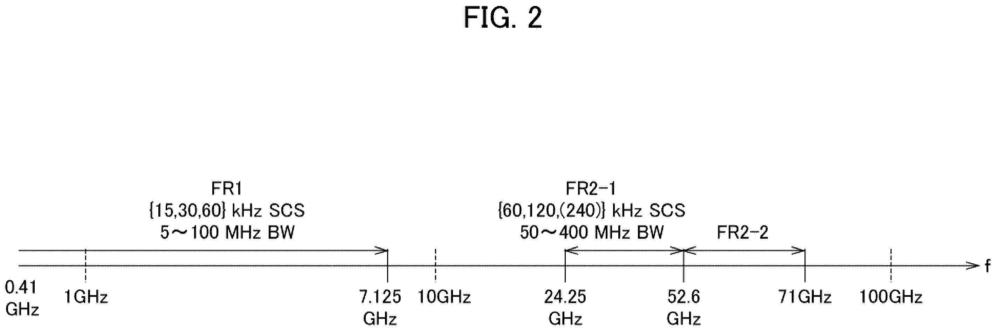

Further, the radio communication system 10 may support a plurality of frequency ranges (FRs). That is, the radio communication system 10 may support the following FRs shown in FIG. 2.
- FR 1: 410 MHz to 7.125 GHz
- FR 2-1: 24.25 GHz to 52.6 GHz
- FR 2-2: more than 52.6 GHz and 71 GHz or less

In the FR 1, a subcarrier spacing (SCS) of 15, 30, or 60 kHz, and a bandwidth (BW) of 5 to 100 MHz may be used. In the FR 2-1, an SCS of 60 or 120 kHz (240 kHz may be included), and a BW of 50 to 400 MHz may be used.

In the FR 2-2, in order to avoid an increase in phase noise, Cyclic Prefix-Orthogonal Frequency Division Multiplexing (CP-OFDM), or Discrete Fourier Transform-Spread-Orthogonal Frequency Division Multiplexing (DFT-S-OFDM) with a larger SCS may be applied.

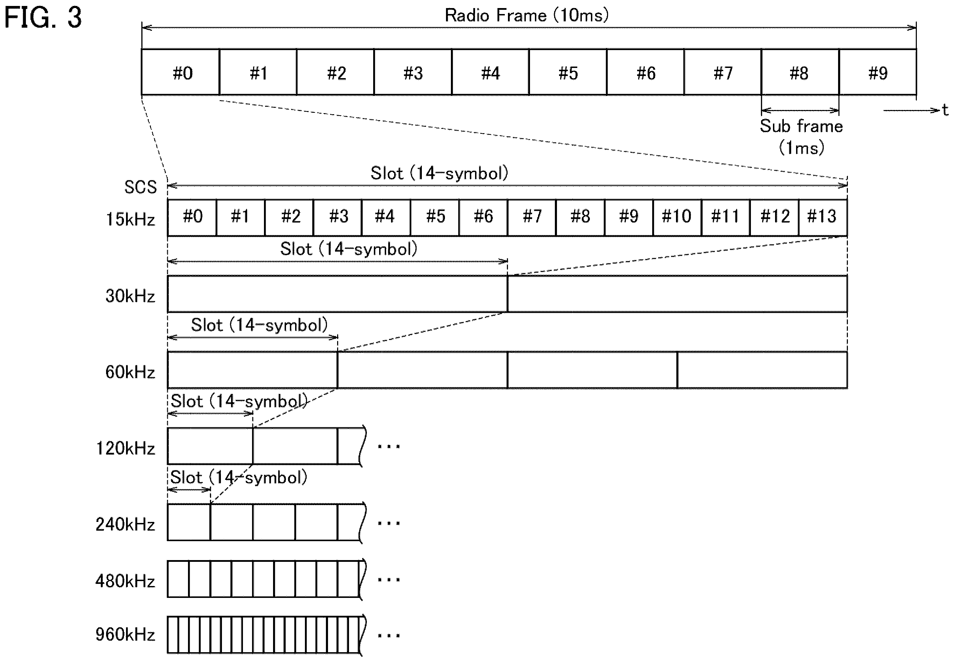

Further, as shown in FIG. 3, one slot includes 14 symbols in the radio communication system 10. If this configuration is maintained, the larger (wider) the SCS, the shorter a symbol period (and slot period). The SCS is not limited to a frequency shown in FIG. 3, and may be a frequency such as 480 kHz or 960 kHz, for example.

Further, the number of symbols constituting one slot does not necessarily have to be 14, but the number of symbols may be 28 or 56, for example. Still further, the number of slots per subframe may vary depending on the SCS.

### (2) Functional block configuration of radio communication system

### (2.1) Functional block configuration of terminal

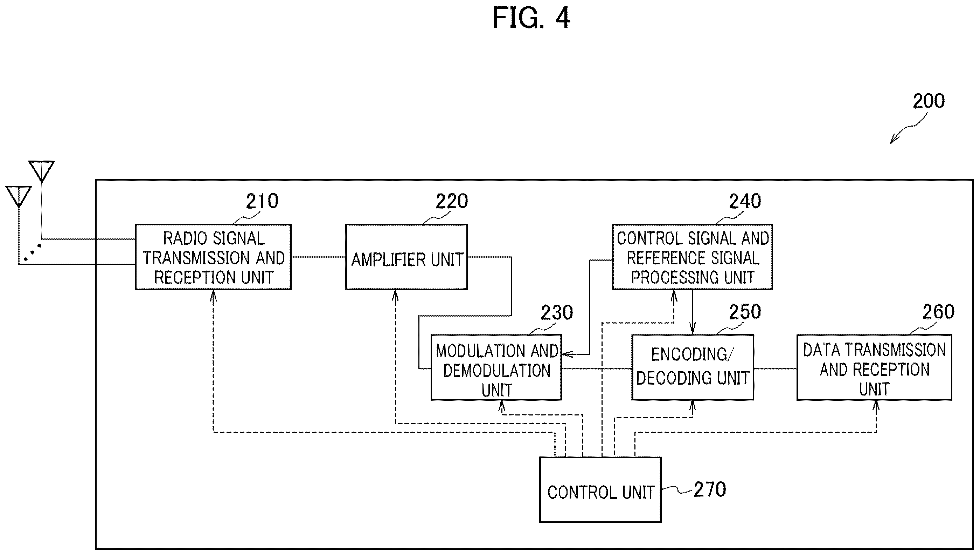

As shown in FIG. 4, the UE 200 includes a radio signal transmission and reception unit 210, an amplifier unit 220, a modulation and demodulation unit 230, a control signal and reference signal processing unit 240, an encoding/decoding unit 250, a data transmission and reception unit 260, and a control unit 270.

The radio signal transmission and reception unit 210 transmits and receives a radio signal to and from the gNB 100. The radio signal transmission and reception unit 210 may constitute a transmitting unit which transmits the radio signal to the gNB 100, and a receiving unit which receives the radio signal from the gNB 100. The radio signal includes a control signal and reference signal/data.

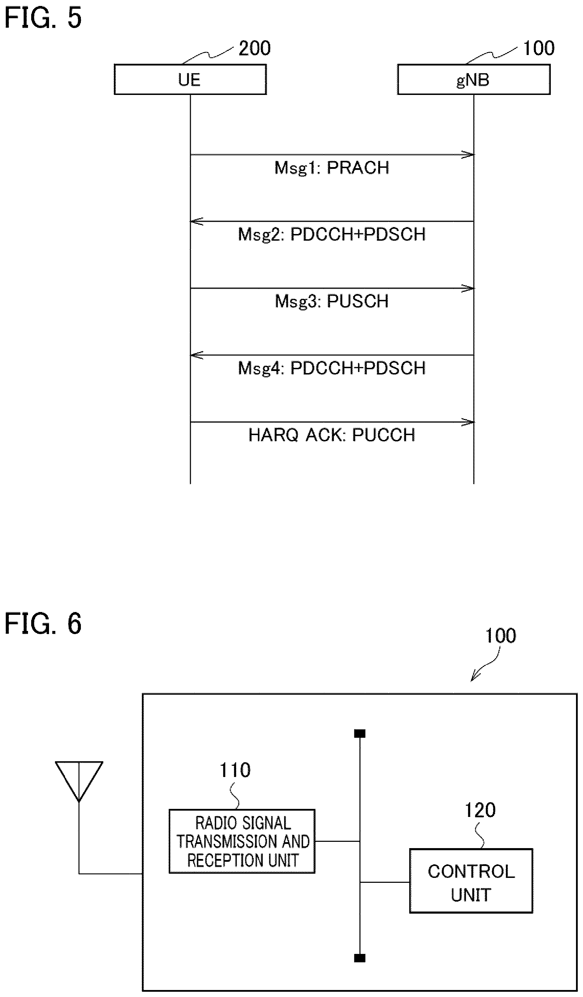

The radio signal transmission and reception unit 210 performs a random access procedure with the gNB 100. The random access procedure will now be briefly described with reference to FIG. 5.

First, the UE 200 transmits a physical random access channel (PRACH) (corresponding to Msg1 in FIG. 5), in response to an SS/PBCH Block (SSB) received from the gNB 100. Second, the UE 200 receives a physical downlink shared channel (PDSCH) (corresponding to Msg2 in FIG. 5), as a Random Access Response (RAR). Third, the UE 200 transmits a PUSCH (corresponding to Msg3 in FIG. 5), as an RRC connection request message. Fourth, the UE 200 receives a PDSCH, as a conflict resolution message (corresponding to Msg4 in FIG. 5). Finally, the UE 200 transmits a PUCCH (corresponding to HARQ ACK in FIG. 5), as Hybrid Automatic Repeat Request (HARQ)-ACK in response to the Msg4.

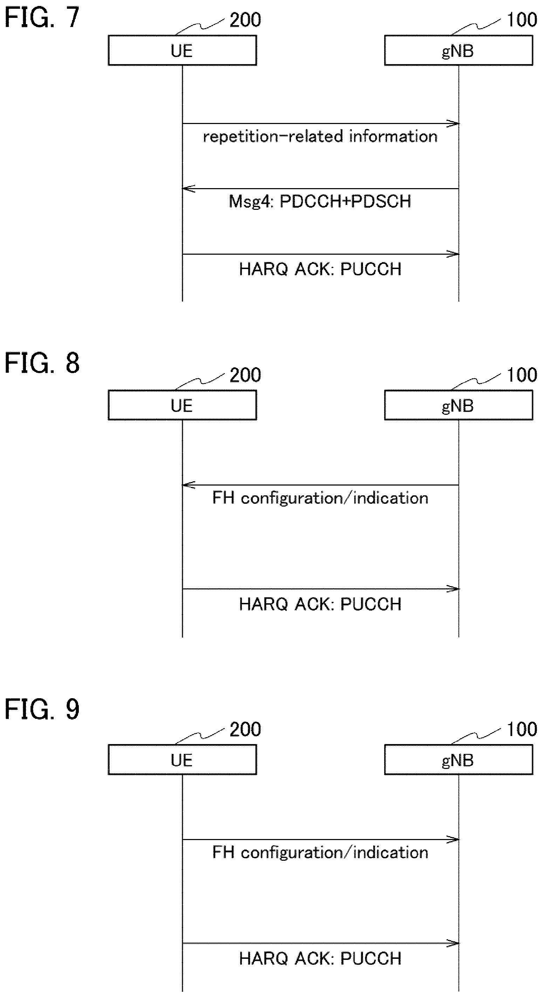

The radio signal transmission and reception unit 210 of the embodiment can repeatedly transmit the PUCCH in response to the Msg4. In accordance with this, the radio signal transmission and reception unit 210 may transmit information related to repeated transmission of the PUCCH in response to the Msg4 (see FIG. 7). The related information is transmitted before the Msg4 PDSCH is scheduled. Further, the radio signal transmission and reception unit 210 may transmit information on an FH type to be applied to repeated transmission of the PUCCH in response to the Msg4. In other words, the radio signal transmission and reception unit 210 may apply any of FH types described later to repeated transmission of the PUCCH in response to the Msg4 (see FIG. 9). The radio signal transmission and reception unit 210 may also repeatedly transmit the PRACH and the Msg3.

The PUCCH in response to the Msg4 may be referred to as a PUCCH for Msg4 HARQ-ACK. In addition, the PUCCH in response to the Msg4 may be referred to as a PUCCH when no dedicated PUCCH resource is configured (common PUCCH resource is used), or may be referred to as a PUCCH using a PUCCH resource indicated by DCI format 1_0 with a Cyclic Redundancy Check (CRC) scrambled by a Temporary Cell-Radio Network Temporary Identifier (TC-RATI). In addition, the "PUCCH" may mean PUCCH transmission. That is, the "PUCCH in response to the Msg4" may mean PUCCH transmission in response to the Msg4.

The amplifier unit 220 includes a Power Amplifier (PA)/Low Noise Amplifier (LNA) or the like. The amplifier unit 220 amplifies a radio signal output from the radio signal transmission and reception unit 210. Further, the amplifier unit 220 amplifies a radio signal output from the modulation and demodulation unit 230.

The modulation and demodulation unit 230 performs data modulation/demodulation, transmission power configuration, resource block allocation, and the like for each predetermined communication destination (gNB 100 or another gNB). In the modulation and demodulation unit 230, CP-OFDM/DFT-S-OFDM may be applied. Further, the DFT-S-OFDM may be used not only for an uplink (UL) but also for a downlink (DL).

The control signal and reference signal processing unit 240 performs processing related to a control signal transmitted and received with the gNB 100, such as a radio resource control (RRC) signaling, for example.

The control signal and reference signal processing unit 140 performs processing related to a reference signal transmitted and received with the UE 200, such as Demodulation Reference Signal (DMRS), Phase Tracking Reference Signal (PTRS), Channel State Information-Reference Signal (CSI-RS), Sounding Reference Signal (SRS), or Positioning Reference Signal (PRS), for example.

A channel includes a control channel and a data channel. The control channel includes a physical uplink control channel (PUCCH), a physical downlink control channel (PDCCH), the physical random access channel (PRACH), a physical broadcast channel (PBCH), and the like. The data channel includes the physical uplink shared channel (PUSCH), the physical downlink shared channel (PDSCH), and the like.

The encoding/decoding unit 250 performs division/connection, coding/decoding, and the like of data included in a radio signal for each predetermined communication destination (gNB 100 or another gNB).

Specifically, the encoding/decoding unit 250 decodes data output from the modulation and demodulation unit 230, and connects the decoded data. Further, the encoding/decoding unit 250 divides data output from the data transmission and reception unit 260 into predetermined sizes, and performs coding on the divided data.

The data transmission and reception unit 260 transmits and receives data to and from the gNB 100. Specifically, the data transmission and reception unit 260 performs assembly/disassembly and the like of Protocol Data Units (PDUs)/Service Data Units (SDUs) among a plurality of layers. The plurality of layers are a medium access control (MAC) layer, a radio link control (RLC) layer, a Packet Data Convergence Protocol (PDCP) layer, and the likes. Further, the data transmission and reception unit 260 performs data error correction and re-transmission control based on a Hybrid Automatic Repeat Request (HARQ).

The control unit 270 controls the UE 200. The control unit 270 controls transmission and reception of a radio signal performed by the radio signal transmission and reception unit 210, amplification performed by the amplifier unit 220, data modulation/demodulation performed by the modulation and demodulation unit 230, signal processing performed by the control signal and reference signal processing unit 240, coding/decoding performed by the encoding/decoding unit 250, and data transmission and reception performed by the data transmission and reception unit 260.

The control unit 270 of the embodiment can select at least one piece of information of Options 1 to 3 which will be described later and which is information related to repeated transmission of the PUCCH in response to the Msg4. The radio signal transmission and reception unit 210 transmits the information related to repeated transmission of the PUCCH in response to the Msg4 selected by the control unit 270. When the information related to repeated transmission of the PUCCH in response to the Msg4 is acquired, the control unit 270 may measure the reception quality of a cell.

The control unit 270 of the embodiment can determine types of FH to be applied to repeated transmission of the PUCCH in response to the Msg4. The types of FH which can be applied are intra-slot frequency hopping (intra-slot FH), and inter-slot frequency hopping (inter-slot FH), for example. FH will be briefly described below.

FH is one of spread spectrum methods, and is a technique of transmitting and receiving radio signals, while switching frequencies at a fixed period. The FH includes an intra-slot FH for switching frequencies within a slot, and an inter-slot FH for switching frequencies between slots.

As configuration information of a resource for performing repeated transmission of the PUCCH in response to the Msg4, the control unit 270 of the embodiment can identify not only one piece of configuration information, but also pieces of configuration information. In other words, the control unit 270 can identify a resource to be indicated or notified by one or more pieces of configuration information transmitted from the gNB 100, based on the configuration information. Further, the number of resources to be indicated or notified to one piece of configuration information is not limited to 16, but may be more than 16. The radio signal transmission and reception unit 210 performs repeated transmission of the PUCCH in response to the Msg4 using the resource identified by the control unit 270.

### (2.2) Functional block configuration of base station

As shown in FIG. 6, the gNB 100 includes a radio signal transmission and reception unit 110 and a control unit 120.

The radio signal transmission and reception unit 110 transmits and receives a radio signal to and from the UE 200. The radio signal transmission and reception unit 110 may constitute a transmitting unit which transmits a radio signal to the UE 200, and a receiving unit which receives a radio signal from the UE 200.

The radio signal transmission and reception unit 110 of the embodiment can transmit, to the UE 200, a parameter for configuring/indicating the above-described related information. In this case, it may be interpreted that the related information selected and reported by the UE 200 is configured by the gNB 100.

The radio signal transmission and reception unit 110 of the embodiment can transmit, to the UE 200, a parameter for configuring/indicating types of FH described above (see FIG. 8).

The radio signal transmission and reception unit 110 of the embodiment can transmit, to the UE 200, configuration information of resource for performing repeated transmission of the PUCCH in response to the Msg4. The number of the configuration information may be one or more than one. In other words, as a resource set for repeated transmission of the PUCCH in response to the Msg4, the gNB 100 may configure/indicate one resource set for the UE 200, or may configure/indicate a plurality of resource sets for the UE 200. Further, the number of resources included in one resource set is not limited to 16, but may be more than 16.

The control unit 120 controls the gNB 100. The control unit 120 controls transmission and reception of a radio signal performed by the radio signal transmission and reception unit 210, for example.

### (3) Operation of radio communication system

### (3.1) Issues

### (3.1.1) Issue 1

When repeated transmission of the PUCCH in response to the Msg4 is scheduled, it is investigated to transmit (report) related information on repeated transmission from the UE to the gNB. However, it has been difficult to reflect the related information on the scheduling, because information to be reported and a reporting method thereof have been unclear.

### (3.1.2) Issue 2

In repeated transmission of the PUCCH in response to the Msg4, application of frequency hopping (FH) is under investigation. Unlike conventional PUCCH transmission, a plurality of slots are used in repeated transmission of the PUCCH. Therefore, it is conceivable to apply inter-slot FH as well as conventional intra-slot FH. However, both FH have advantages and disadvantages, and a situation where only one of them can be applied has been inconvenient.

### (3.1.3) Issue 3

16 resources have been available as one resource set for transmission of the PUCCH in response to the Msg4. However, in a wide range of cells such as a NTN, especially when repeated transmission is applied, the number of available resources has been insufficient and the number of users who can start data communication has been limited. Further, when the number of available resources is increased, there has been an issue for the UE regarding how to identify the resources.

### (3.2) Operation examples

### (3.2.1) Operation Example 1

When repeated transmission of the PUCCH in response to the Msg4 is available, the UE 200 can transmit (report) one or more pieces of information related to repeated transmission of the PUCCH in response to the Msg4, as shown in FIG. 7. The information related to repeated transmission of the PUCCH in response to the Msg4 is reported before the Msg4 PDSCH is scheduled. Multiple pieces of related information are defined, and the UE 200 reports one or more of them. The UE 200 can select at least one piece of information from the following pieces of related information (Options 1 to 3), and report the at least one piece of information to the gNB 100, for example.

### (Types of related information)

### Option 1: Request information on repeated transmission based on measurement of the reception quality (for example, Reference Signal Received Power (RSRP))

Example 1: It is notified that a measurement value of the reception quality is equal to or less than a threshold value configured for the measurement value. That is, it is notified that repeated transmission is required.

Example 2: A required repetition factor (number of repetitions) is notified. That is, the number of transmissions required is notified.

Effect of Option 1: It is effective, when the reliability of gNB measurement based on Msg3 reception is low.

### Option 2: Capability information related to repeated transmission

In this case, the gNB 100 determines a repetition factor without notification of UE measurement.

Effect of Option 2: It is effective, when the reliability of gNB measurement based on Msg3 reception is high.

### Option 3: Information related to measurement of the reception quality (for example, Reference Signal Received Power (RSRP))

Example 1: A measurement value of the reception quality is notified.

Example 2: The difference between a measurement value of the reception quality, and a threshold value configured for the measurement value is notified.

Effect of Option 3: It is effective, when the reliability of gNB measurement based on Msg3 reception is low.

The measurement of the reception quality is performed based on an SSB, a DMRS of the Msg2 PDCCH/PDSCH, a CSI-RS of the Msg2 PDSCH, or a radio signal configured for measurement, which are transmitted from the gNB 100.

### (Condition for determining type of related information to be reported)

The related information to be reported may be determined based on a specific condition.

### Condition 1: A configuration/indication parameter transmitted from a network (gNB 100)

### <Parameter configuration/indication method>

Example 1: Configuration is made by means of a cell-specific method (for example, system information block (SIB)).

Example 2: Configuration/indication is made by means of a UE-specific method (for example, Msg2 (RAR)).

### <Parameter format>

Example 1: The type of related information to be reported is configure/indicated.

Example 2: The type of related information to be reported is determined according to the number of configuration/indication parameters.

Example 2-1: Option 2 described above, when one repetition factor is configured.

Example 2-2: Option 1 described above, when a plurality of repetition factors are configured.

A repetition factor indicating one, that is, a repetition factor indicating that the number of repetition is one does not have to be counted in the number of configuration/indication parameters.

Example 3: The type of related information to be reported is determined depending on whether repeated transmission of the Msg3 is configured/indicated.

Example 4: The type of related information to be reported is determined depending on whether repeated transmission of the Msg1 (PRACH) is configure/indicated.

Effect of Condition 1: The network (gNB 100) can determine which option to use, based on the implementation of the network (gNB 100) (for example, whether the reliability of gNB measurement is high or low).

### Condition 2: Terminal capability information (UE 200 implementation)

Example 1: If the UE 200 does not support Option 2, while supporting Option 1, Option 1 is applied.

Example 2: If the UE 200 does not support Option 1, while supporting Option 2, Option 2 is applied.

Example 3: If the UE 200 supports both Option 1 and Option 2, an option to be applied is determined based on the configuration/indication of the gNB 100, or the implementation of the UE 200.

Example 4: The UE 200 notifies an option to be applied as UCI or MAC layer information (for example, MAC sub-header, MAC Control Element (CE)).

Effect of Condition 2: This can avoid complicating the implementation of the UE 200.

### Condition 3: Behavior of UE before Msg4 PDSCH is scheduled

Example 1: The type of related information to be reported is determined depending on whether repeated transmission of the Msg3 is applied.

Example 2: The type of related information to be reported is determined depending on whether repeated transmission of the Msg1 (PRACH) is applied.

Effect of Condition 3: The behavior of the UE 200 can be the same/similar for these repeated transmission measurements/reports.

### (Transmission of all pieces of information defined in specification)

It is possible to report all pieces of information defined as pieces of related information on repeated transmission of the PUCCH in response to the Msg4.

Example 1: Each of the pieces of related information includes "incapability to report the information" (hereinafter referred to as incapable).

Example 1-1: When 1, 2, 4, and 8 are configured as repetition factors, 3 bits are used for information on a required repetition factor. In this case, 000 = incapable, 001 = repetition factor indicates 1, 010 = repetition factor indicates 2, 011 = repetition factor indicates 4, and 100 = repetition factor indicates 8.

Example 1-2: When 1, 2, and 4 are configured as repetition factor, 2 bits are used for information on a required repetition factor. In this case, 00 = incapable, 01 = repetition factor indicates 1, 10 = repetition factor indicates 2, and 11 = repetition factor indicates 4.

Example 2: For related information, as a report format of related information on repeated transmission of the PUCCH in response to the Msg4, the same format is applied, when one repetition factor is configured, and when a plurality of repetition factors are configured, for example. This content is applied to each type (all types) of related information.

Effect: Since it is sufficient if one report format defined in a specification is introduced, it is possible to suppress spec impact.

### (Method of reporting related information)

Related information is reported using the Msg3. Specifically, related information is reported using Logical Channel Identifier (LCID) code points of the Msg3 PUSCH. Among the LCID code points, it is possible to use 37-43 and 47 which are reserved, for example. The method of reporting related information is not limited to the LCID code points of the Msg3 PUSCH, but may be the following: PRACH preamble/occasion, scrambling sequence, DMRS port, different CS for DMRS, CCCH (1 bit included in RRCSetupRequest may be used, or a bit defined as 'spare' in existing specification may be used), and MAC subheader (1 or 2 bits defined as 'R' in existing specification, for example). In the following, a method of using the LCID code points of the Msg3 PUSCH will be exemplified.

Example 1: Different code points are used for Options 1 to 3 described above individually.

For example, 37 is used for Option 1, 38 is used for Option 2, and 39 is used for Option 3.

Effect of Example 1: It is possible to easily distinguish Options 1 to 3.

Example 2: The same code point (for example, 37) is used for Option 1 and Option 2.

In this case, Options 1 to 3 can be distinguished based on the number of repetition factors configured.
- If one repetition factor is configured, capability information on repeated transmission is reported (Option 2).
- If a plurality of repetition factors are configured, request information on repeated transmission is reported (Option 1).

Effect of Example 2: It is possible to reduce consumption of code points (alternatively, resources in other signal domains).

Different LCID code points may be used to report related information, in RedCap (Reduced Capability) UE, that is, an IoT terminal which is more simplified than a terminal such as a smartphone (a terminal which supports only half-duplex or frequency-division-duplex with limited bandwidth, the number of MIMO layers, and modulation order to be supported, for example).

### (3.2.2) Operation Example 2

The gNB 100 or the UE 200 can support both intra-slot FH and inter-slot FH, as FH to be applied to repeated transmission of the PUCCH in response to the Msg4. That is, as FH to be applied to repeated transmission of the PUCCH in response to the Msg4, both intra-slot FH and inter-slot FH may be defined, and it may be determined which of intra-slot FH and inter-slot FH is to be used. In this case, FH to be applied can be determined according to the desired advantages. The intra-slot FH and inter-slot FH have the following advantages.
- Intra-slot FH: User-multiplexing performance is excellent, in a cell where a UE which performs repeated transmission of the PUCCH, and a UE which does not perform repeated transmission of the PUCCH co-exist.
- Inter-slot FH: Direction performance is excellent, when channel estimation performance is good.

The gNB 100 can determine the type of FH to be applied to repeated transmission of the PUCCH in response to the Msg4, and transmit (report) the determined type of FH to the UE 200 as shown in FIG. 8. Further, the UE 200 can determine the type of FH to be applied to repeated transmission of the PUCCH in response to the Msg4, and transmit (report) the determined type of FH to the gNB 100 as shown in FIG. 9. Still further, although not shown in any FIGs, the gNB 100 and the UE 200 can cooperate to determine the type of FH to be applied to repeated transmission of the PUCCH in response to the Msg4.

### (Condition for determining FH to be applied)

### Condition 1: A configuration/indication parameter transmitted from the network (gNB 100)

Example 1: It is configured by means of a cell-specific method (for example, system information block (SIB)).

Example 2: It is configured/indicated by means of a UE-specific method (for example, Msg2 (RAR), Msg4-scheduling DCI).

The configuration/indication may be performed for each repetition factor. Further, if there is no configuration/indication, it may mean application of intra-slot FH or application of inter-slot FH.

Effect of Condition 1: The type of FH to be applied by the network (gNB 100) can be determined according to the preference of the network (gNB 100).

### Condition 2: Terminal capability information (UE 200 implementation)

The UE 200 may report the type of FH to be applied to the network (gNB 100) using the PRACH or Msg3 as follows.
- Which of intra-slot FH and inter-slot FH is to be applied
- Whether intra-slot FH is supported
- Whether inter-slot FH is supported

If repeated transmission of the PUCCH in response to the Msg4 is supported, it may be assumed that it is essential to support intra-slot FH, and it may be assumed that it is essential to support inter-slot FH.

Effect of Condition 2: The UE 200 may not support both types of FH.

### Condition 3: Combination of Condition 1 and Condition 2

Even if inter-slot FH is configured as the type of FH to be applied by the network (gNB 100), if the UE 200 does not support inter-slot FH, the UE 200 reports incapable about repeated transmission of the PUCCH, or does not recommend (reports not to recommend) repeated transmission of the PUCCH, for example.

### Condition 4: UE behavior before the Msg4 PDSCH is scheduled

Example 1: The type of FH to be applied is determined depending on whether repeated transmission of the Msg3 is applied.

Example 2: The type of FH to be applied is configured to be the same as the type of FH to be applied to repeated transmission of the Msg3.

The type of FH to be applied may be determined based on whether repeated transmission of the Msg1 (PRACH) can be applied instead of the Msg3.

Effect of Condition 4: Since the same mechanism as repeated transmission of the Msg3 can be applied, implementation is easy.

### Condition 5: Repetition factor

- If the number of slots for performing repeated transmission is one (if repeated transmission is not performed), intra-slot FH is applied.
- If the number of slots for performing repeated transmission is more than one (if repeated transmission is performed), inter-slot FH is applied.

### Condition 6: PUCCH format

- If it is 0, inter-slot FH is applied.
- If it is 1, intra-slot FH is applied.

### Condition 7: Number of symbols of PUCCH per slot

- If the number of symbols is 14, intra-slot FH is applied.
- If the number of symbols is 2/4/10, inter-slot FH is applied.

### Condition 8: Band/frequency range

- In the case of band X/FR 1, intra-slot FH is applied.
- In the case of band Y/FR 2, inter-slot FH is applied.

### (3.2.3) Operation Example 3

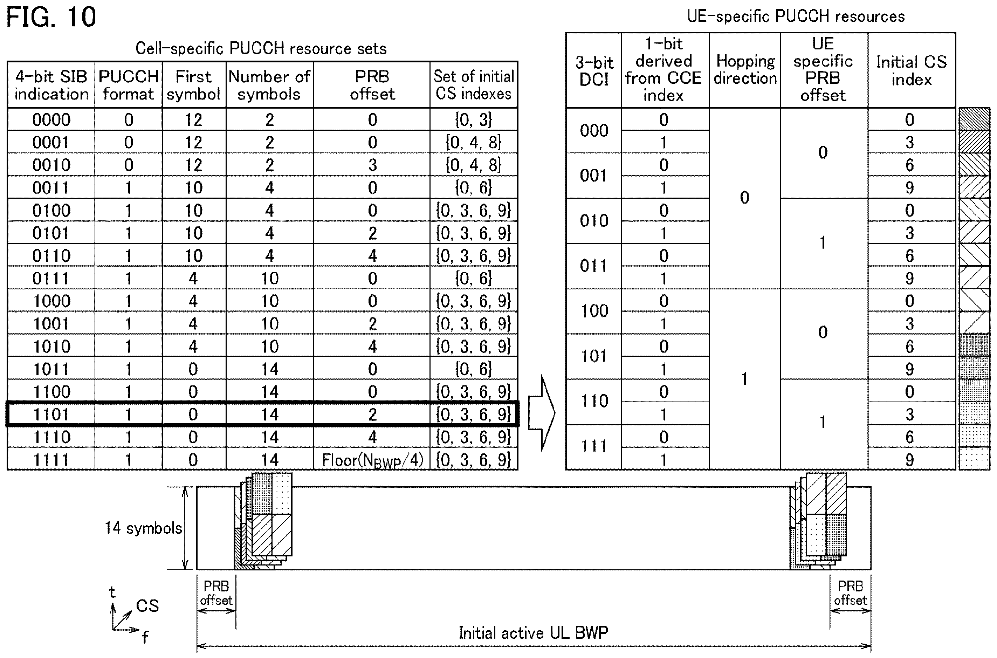

As shown on the left side of FIG. 10, a resource set for repeated transmission of the PUCCH is indicated or notified using one piece of configuration information (configuration information in a line surrounded by a thick frame), out of multiple pieces of configuration information transmitted from the gNB 100.

In FIG. 10, one resource set includes 16 resources. That is, one resource set for repeated transmission of the PUCCH or 16 resources are configured using one piece of configuration information shown on the left side of FIG. 10. The right side of FIG. 10 shows one resource set for repeated transmission of the PUCCH, or 16 resources recognized by the UE 200. The resource set (resource) in this context is not limited to a resource set (resource) in a frequency direction, but may be understood to mean a resource set (resource) in a time direction or a resource set (resource) in a cyclic shift (CS) direction.

As shown on the left side of FIG. 10, the following information is configured by 4-bit included in an SIB transmitted from the gNB 100.
- A PUCCH format
- An initial symbol index of PUCCH transmission in each slot
- The number of symbols of a PUCCH per slot
- Common physical resource block (PRB) offset
- A set of initial CS indexes

As shown on the right side of FIG. 10, the following information is notified by 3-bit included in DCI received by UE 200, and 1-bit determined from a Control Channel Element (CCE) index.
- A direction of FH
- A UE-specific PRB offset
- An initial CS index

The PBR offset may be understood as position information of the resource set (resource) in the frequency direction. A value obtained by adding the UE-specific PRB offset to the common PRB offset may be a position of a frequency resource of a PUCCH.

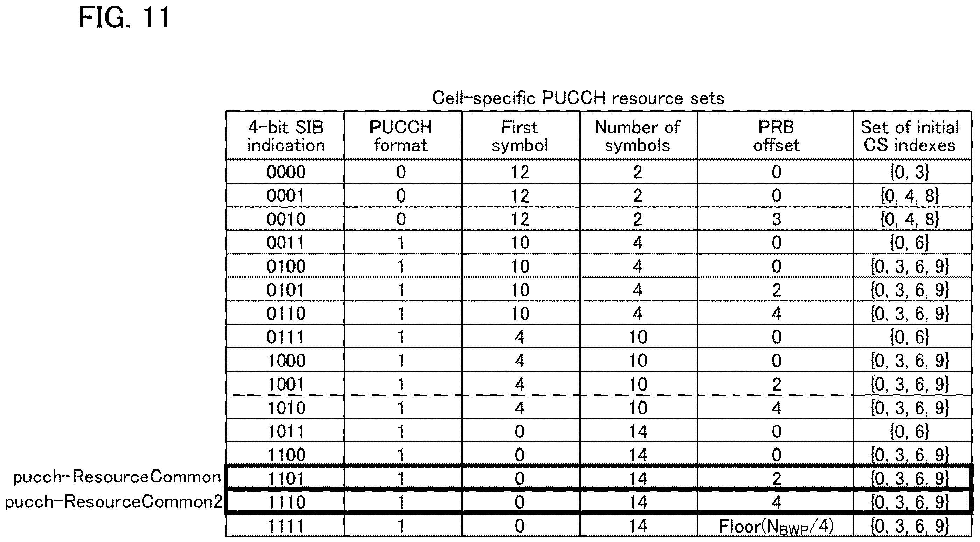

With reference to FIGs. 11 to 14, an embodiment will be described, in which more than 16 resources are configured for repeated transmission of the PUCCH in response to the Msg4.

### (Configuration of a plurality of resource sets)

As shown in FIG. 11, in one cell/beam, the gNB 100 can transmit not only one piece of configuration information, but also pieces of configuration information for repeated transmission of the PUCCH in response to the Msg4 performed by the UE 200. That is, the gNB 100 can configure/indicate not only one resource set, but also a plurality of resource sets for repeated transmission of the PUCCH in response to the Msg4. The UE 200 can identify, based on the pieces of configuration information transmitted from the gNB 100, a resource set to be indicated or notified to each piece of configuration information, for repeated transmission of the PUCCH in response to the Msg4.

In FIG. 11, two pieces of configuration information (pucch-ResourceCommon and pucch-ResourceCommon2 in FIG. 11) surrounded by a bold line are transmitted, as information configuring/indicating a resource set for repeated transmission of the PUCCH in response to the Msg4. However, the present invention is not limited thereto, and three or more pieces of configuration information may be transmitted. As shown in FIG. 11, the pieces of configuration information indicate or notify different resource sets individually.

Further, the pieces of configuration information are configured/indicated as follows.

Example 1: PUCCH-ConfigCommon including two or more resource sets for repeated transmission of the PUCCH in response to the Msg4 (for example, pucch-ResourceCommon and pucch-ResourceCommon2) is transmitted via SIB 1.

Example 2: The first configuration information (PUCCH-ConfigCommon/pucch-ResourceCommon) is transmitted via SIB 1, and the second (and thereafter) configuration information (PUCCH-ConfigCommon/pucch-ResourceCommon2) is transmitted via NTN-specific SIB (SIB 19).

Effect: Since a plurality of resource sets are usable from an existing table in one cell/beam, implementation is easy.

### (Configuration of resource set including more than 16 resources)

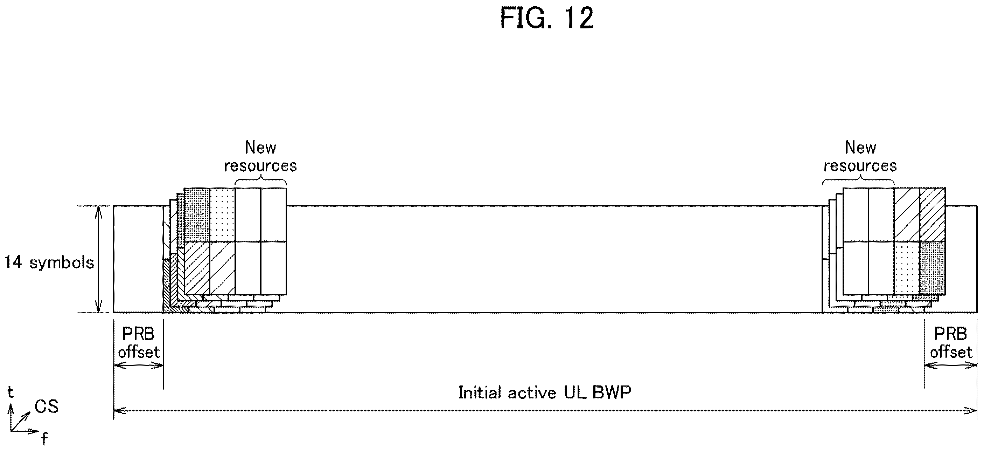

In contrast to the embodiment shown in FIG. 11, in which a plurality of resource sets, each including 16 resources, are configured, in an embodiment shown in FIGs. 12 to 14, one resource set including more than 16 resources is configured. In the examples shown in FIGs. 12 to 14, one resource set includes 32 resources, but the present invention is not limited thereto. New resources in FIGs. 12 to 14 indicate added 16 resources. 16 resources other than the above 16 resources may be referred to as a "conventional resource set" for convenience.

A description will be given below regarding information related to the offset which is additionally usable, and a cyclic shift (CS) index, as configuration information of one resource set including more than 16 resources. The information related to the offset is position information of a resource in the frequency direction, for example.

### <Position information of resource in frequency direction>

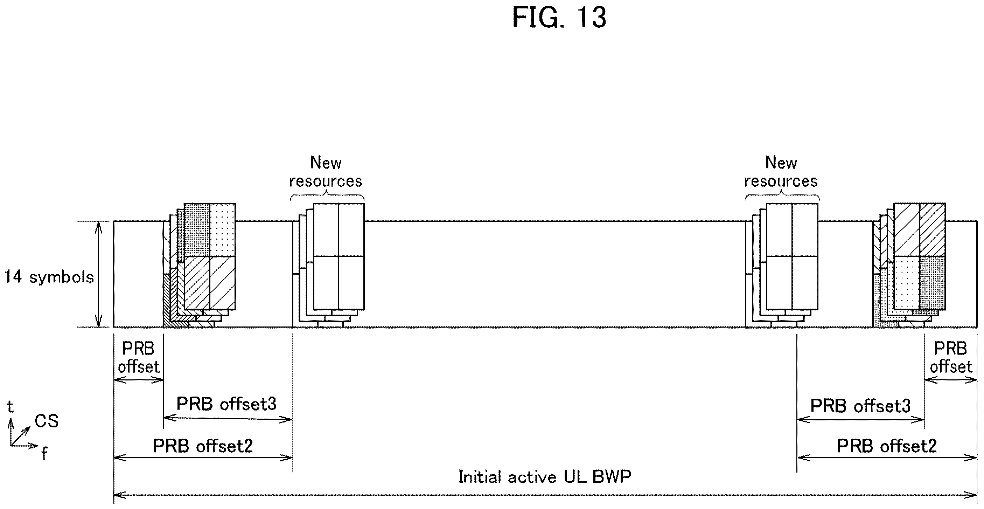

As shown in FIGs. 12 and 13, it is assumed that a plurality of PRB offsets included in one resource set can be used.

FIG. 12 shows an example in which adjacent PRB offsets are additionally usable for a PRB offset used in a conventional resource set. When the number of the common PRB offsets is two, 2 and 3 may be notified as UE-specific PRB offsets, in addition to conventional 0 and 1 (see UE specific PRB offset in FIG. 10), for example.

FIG. 13 shows an example in which non-adjacent PRB offsets are additionally usable for the PRB offset used in the conventional resource set.

Example 1: A plurality of offset values (PRB offset and PRB offset2 in FIG. 13) may be configured as the common PRB offsets, and which of the plurality of offset values should be applied may be notified for each UE. The plurality of offset values are defined as specific values based on an edge of an initial active UL BWP. The offset may be configured via SIB (SIB 1 or SIB 19), or may be indicated via Msg4-scheduling DCI.

Example 2: An additional PRB offset value (PRB offset3 in FIG. 13) may be configured based on the common PRB offset (PRB offset in FIG. 13). The additional PRB offset value may be notified for each UE, and whether to apply the additional PRB offset value may be notified for each UE. The additional PRB offset value is defined as a specific value based on the position information of the conventional resource set (PRB offset in FIG. 13). The offset may be configured via SIB (SIB 1 or SIB 19), or may be indicated via Msg4-scheduling DCI.

Effect: More resource sets are usable, and additionally it is possible to avoid the risk of deterioration in detection performance of a resource set.

### <CS index>

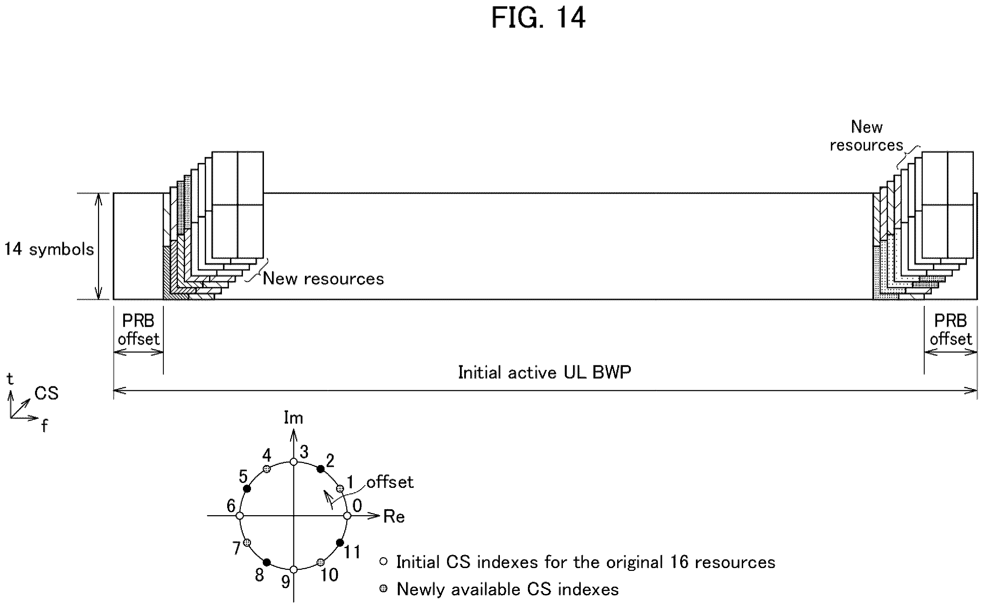

As shown in FIG. 14, it is assumed that an initial CS index candidate included in one resource set includes more values than those in an existing specification. That is, the initial CS index not included in the conventional resource set is available. A specific value/offset may be defined, configured via SIB (SIB 1 or SIB 19), or indicated via Msg4-scheduling DCI, for example. The offset may be an offset value from the initial CS index included in the conventional resource set. The offset value may be notified for each UE, and whether to apply the offset value may be notified for each UE.

The upper side of FIG. 14 shows resources using the initial CS index not included in the conventional resource set. However, as shown in the lower side of FIG. 14, resources in the frequency and time directions included in the conventional resource set, and resources in the frequency and time directions included in the newly configured resource set may be alternately configured in a CS direction. That is, it is sufficient if different CS indices are used.

Effect: More resource sets are usable, and additionally resource sets in the frequency and time directions are not consumed additionally.

### (Indication method of more than 16 resources)

### Example 1: Msg4-scheduling DCI

- One or more bits of an MCS field
- One or more bits of an HPN field
- One or more bits of an RV field
- One or more bits of a DAI field
- One or more bits of a TPC command field

### Example 2: RAR

- RAR UL grant

### Example 3: CCE index

- more than one bit derived from the CCE index (it may be two bits, for example).

### Example 4: Dynamic notification of repetition factor

- Which resource set to use, or whether to use additional defined resources in a resource set, may be associated with the dynamic notification of the repetition factor. If the repetition factor is one, conventional resources included in a conventional resource set may be notified, for example. If the repetition factor is more than one, the additionally defined resource set or resources may be notified. The dynamic notification may be performed using DCI scheduling the Msg4 PDSCH.

Effect: It is possible to apply dynamic scheduling to a resource set including more than 16 resources.

A PUCCH resource newly additionally defined by means of the above method may have 16 or more indices, and an r_PUCCH in a specification (TS38.213) may have a value of 16 or more.

In addition, which resource set to use, or whether to use additional defined resources in a resource set, may be notified using any of Examples 1, 2, 3, and 4 described above. One of 16 resources may be notified using DCI and a CCE index. In addition, which resource to use among 32 resources may be notified using a combination of any of Examples 1, 2, 3, and 4, described above, DCI and a CCE index.

### (Reporting capability information of a terminal which supports a resource set including more than 16 resources)

### Example 1: Reporting using Msg1 (PRACH)

- Preamble and/or occasion

### Example 2: Reporting using Msg3 PUSCH

- Scrambling sequence, DMRS port, different CS for DMRS, LCID code point

Effect: The network (gNB 100) can indicate one resource in a conventional resource set to the UE 200 which does not support repeated transmission.

### (4) Other embodiments

Although the contents of the present invention have been described in accordance with the embodiments, it is obvious to those skilled in the art that the present invention is not limited to the descriptions, and that various modifications and improvements are possible.

In the above-described disclosure, the UE 200 has selected and reported information of any of Options 1 to 3 described above, as information related to repeated transmission of the PUCCH in response to the Msg4, but the present invention is not limited thereto. Two or more options of Options 1 to 3 described above may be selected and reported, for example.

In the above-described disclosure, a resource set may be read as a resource, or a resource may be read as a resource set.

In the above-described disclosure, it is assumed that the UE 200 of the embodiment is applied to an NTN, but the present invention is not limited thereto. The UE 200 can be applied not only to an NTN, but also to a Terrestrial Network (TN).

The operation examples described above may be combined and applied compositely as long as there is no contradiction.

In the above disclosure, terms such as configure, activate, update, indicate, enable, specify, and select may be read interchangeably. Similarly, terms such as link, associate, correspond, and map may be read interchangeably, and terms such as allocate, assign, monitor, and map may be read interchangeably.

In addition, terms such as specific, dedicated, UE-specific, and UE-dedicated may be read interchangeably. Similarly, terms such as common, shared, group-common, UE-common, and UE-shared may be read interchangeably.

The block diagram (FIG. 4, FIG. 6) that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate pieces of apparatus (for example, via wire, wireless, or the like) and using these plurality of pieces of apparatus. The functional blocks may be implemented by combining software into the apparatus described above or the plurality of apparatuses described above.

Functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but the functions are by no means limited to these. For example, a functional block (component) to implement a function of transmission may be referred to as a "transmitting section (transmitting unit)," a "transmitter". The method for implementing each component is not particularly limited as described above.

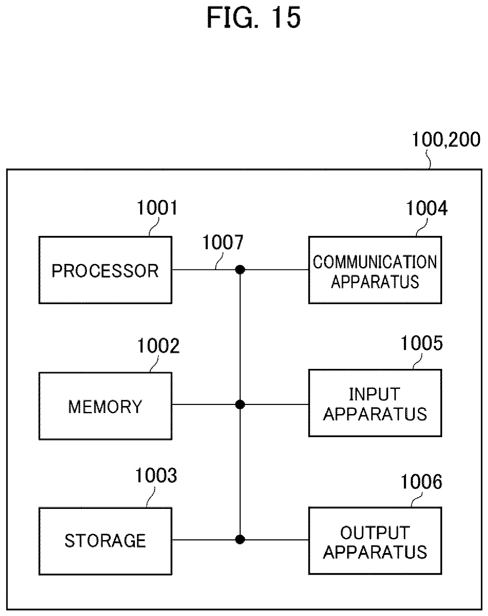

Furthermore, the above-described gNB 100 and UE 200 (the apparatus) may function as a computer that executes the processes of the radio communication method of the present disclosure. FIG. 15 is a diagram to show an example of a hardware structure of the apparatus. As shown in FIG. 15, the apparatus may each be formed as a computer apparatus that includes a processor 1001, a memory 1002, a storage 1003, a communication apparatus 1004, an input apparatus 1005, an output apparatus 1006, a bus 1007, and so on.

Note that in the following description, the word such as an apparatus can be read as a circuit, a device, a section, a unit, and so on. The hardware structure of the apparatus may be configured to include one or more of apparatuses shown in the drawings, or may be configured not to include part of apparatuses.

Each function block (FIG. 4, FIG. 6) of the apparatus is implemented by one of hardware elements or the combination of the hardware elements in the computer apparatus.

Each function of the apparatus is implemented, for example, by allowing certain software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least part of the operations of the above-described embodiments are used. The above-described various processes may be performed by a single processor 1001, or may be performed by two or more processors 1001 simultaneously or sequentially. The processor 1001 may be implemented by one or more chips. It should be noted that the program may be transmitted from a network via a telecommunication line.

The memory 1002 is a computer-readable recording medium, and may be constituted with, for example, at least one of a Read Only Memory (ROM), an Erasable Programmable ROM (EPROM), an Electrically Erasable Programmable ROM (EEPROM), a Random Access Memory (RAM), and so on. The memory 1002 may be referred to as a "register," a "cache," a "main memory (primary storage apparatus)" and so on. The memory 1002 can store executable programs (program codes), software modules, and the like for implementing the method according to one embodiment of the present disclosure.

The storage 1003 is a computer-readable recording medium, and may be constituted with, for example, at least one of a compact disc (Compact Disc ROM (CD-ROM) and so on), a hard disk drive, a flexible disk, a magneto-optical disk (for example, a compact disc, a digital versatile disc, a Blu-ray (registered trademark) disk), a smart card, a flash memory device (for example, a card, a stick, and a key drive), a floppy (registered trademark) disk, a magnetic stripe, and so on. The storage 1003 may be referred to as "auxiliary storage apparatus." The above recording medium may be a database including at least one of the memory 1002 and the storage 1003, a server, or any other appropriate medium.

The communication apparatus 1004 is hardware (transmitting/receiving device) for allowing inter-computer communication via at least one of wired and wireless networks, and may be referred to as, for example, a "network device," a "network controller," a "network card," a "communication module," and so on.

The communication apparatus 1004 may be configured to include a high frequency switch, a duplexer, a filter, a frequency synthesizer, and so on in order to realize, for example, at least one of frequency division duplex (FDD) and time division duplex (TDD).

The input apparatus 1005 is an input device that receives input from the outside (for example, a keyboard, a mouse, a microphone, a switch, a button, a sensor, and so on). The output apparatus 1006 is an output device that performs output to the outside (for example, a display, a speaker, a Light Emitting Diode (LED) lamp, and so on). Note that the input apparatus 1005 and the output apparatus 1006 may be provided in an integrated structure (for example, a touch panel).

Furthermore, pieces of apparatus, including the processor 1001, the memory 1002, and others, are connected by a bus 1007 for communicating information. The bus 1007 may be formed with a single bus, or may be formed with buses that vary between pieces of apparatus.

Also, the apparatus may be structured to include hardware such as a microprocessor, a digital signal processor (DSP), an Application Specific Integrated Circuit (ASIC), a Programmable Logic Device (PLD), a Field Programmable Gate Array (FPGA), and so on, and part or all of the functional blocks may be implemented by the hardware. For example, the processor 1001 may be implemented with at least one of these pieces of hardware.

Notification of information is by no means limited to the aspects/embodiments described in the present disclosure, and other methods may be used as well. For example, notification of information may be implemented by using physical layer signaling (for example, downlink control information (DCI), uplink control information (UCI)), higher layer signaling (for example, RRC signaling, Medium Access Control (MAC) signaling), broadcast information (master information block (MIB), system information block (SIB)), and other signals or combinations of these. Also, RRC signaling may be referred to as an "RRC message," and can be, for example, an RRC connection setup message, an RRC connection reconfiguration message, and so on.

The aspects/embodiments illustrated in the present disclosure may be applied to at least one of Long Term Evolution (LTE), LTE-Advanced (LTE-A), SUPER 3G, IMT-Advanced, 4th generation mobile communication system (4G), 5th generation mobile communication system (5G), Future Radio Access (FRA), New Radio (NR), New radio access (NX), W-CDMA (registered trademark), GSM (registered trademark), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate systems, next-generation systems that are enhanced based on these. A plurality of systems may be combined (for example, a combination of at least one of LTE and LTE-A, and 5G, and the like) for application.

The order of processes, sequences, flowcharts, and so on that have been used to describe the aspects/embodiments in the present disclosure may be re-ordered as long as inconsistencies do not arise. For example, although various methods have been illustrated in the present disclosure with various components of steps in exemplary orders, the specific orders that are illustrated herein are by no means limiting.

Specific operations which have been described in the present disclosure to be performed by a base station may, in some cases, be performed by an upper node thereof. **In** a network including one or a plurality of network nodes with the base station, it is clear that various operations that are performed to communicate with a terminal can be performed by the base station and other network nodes (for example, Mobility Management Entities (MMEs), Serving-Gateways (S-GWs), and so on may be possible, but these are not limiting) other than the base station, or combinations of these. According to the above, a case is described in which there is a single network node other than the base station. However, a combination of multiple other network nodes may be considered (e.g., MME and S-GW).

The information or signals may be output from a higher layer (or lower layer) to a lower layer (or higher layer). The information or signals may be input or output through multiple network nodes.

The input or output information may be stored in a specific location (e.g., memory) or managed using management tables. The input or output information may be overwritten, updated, or added. The information that has been output may be deleted. The information that has been input may be transmitted to another apparatus.

A determination may be realized by a value (0 or 1) represented by one bit, by a boolean value (true or false), or by comparison of numerical values (e.g., comparison with a predetermined value).

Each aspect/embodiment described in the present disclosure may be used independently, may be used in combination, or may be used by switching according to operations. Further, notification of predetermined information (e.g., notification of "X") is not limited to an explicit notification, and may be performed by an implicit notification (e.g., by not performing notification of the predetermined information).

Software should be broadly interpreted to mean, regardless of whether referred to as software, firmware, middle-ware, microcode, hardware description language, or any other name, instructions, instruction sets, codes, code segments, program codes, programs, subprograms, software modules, applications, software applications, software packages, routines, subroutines, objects, executable files, executable threads, procedures, functions, and the like.

Further, software, instructions, information, and the like may be transmitted and received via a transmission medium. For example, in the case where software is transmitted from a website, server, or other remote source using at least one of wired line technologies (such as coaxial cable, fiber optic cable, twisted pair, digital subscriber line (DSL), etc.) and wireless technologies (infrared, microwave, etc.), at least one of these wired line technologies or wireless technologies is included within the definition of the transmission medium.

Information, a signal, or the like, described in the present disclosure may be represented by using any one of various different technologies. For example, data, an instruction, a command, information, a signal, a bit, a symbol, a chip, or the like, referred to throughout the above description, may be represented by a voltage, an electric current, electromagnetic waves, magnetic fields, a magnetic particle, optical fields, a photon, or a combination thereof.

It should be noted that a term described in the present disclosure and/or a term required for understanding of the present disclosure may be replaced by a term having the same or similar meaning. For example, a channel and/or a symbol may be a signal (signaling). Further, a signal may be a message. Further, the component carrier (CC) may be referred to as a carrier frequency, cell, frequency carrier, or the like.

As used in the present disclosure, the terms "system" and "network" are used interchangeably.

Further, the information, parameters, and the like, described in the present disclosure may be expressed using absolute values, relative values from predetermined values, or they may be expressed using corresponding different information. For example, a radio resource may be what is indicated by an index.

The names used for the parameters described above are not used as limitations. Further, the mathematical equations using these parameters may differ from those explicitly disclosed in the present disclosure. Because the various channels (e.g., PUCCH, PDCCH) and information elements may be identified by any suitable names, the various names assigned to these various channels and information elements are not used as limitations.

In the present disclosure, the terms such as a "base station (BS)," a "radio base station," a "fixed station," a "NodeB," an "eNodeB (eNB)," a "gNodeB (gNB)," an "access point," a "transmission point," a "reception point," a "transmission/reception point," a "cell," a "sector," a "cell group," a "carrier," a "component carrier," and so on can be used interchangeably. A base station may be referred to as the terms such as a "macro cell," a "small cell," a "femto cell," a "pico cell," and so on.

A base station can accommodate one or a plurality of (for example, three) cells (which may be referred to as sectors). When a base station accommodates a plurality of cells, the entire coverage area of the base station can be partitioned into multiple smaller areas, and each smaller area can provide communication services through base station subsystems (for example, indoor small base stations (Remote Radio Heads (RRHs))).

The term "cell" or "sector" refers to part of or the entire coverage area of at least one of a base station and a base station subsystem that provides communication services within this coverage.

In the present disclosure, the terms "mobile station (MS)," "user terminal," "user equipment (UE)," and "terminal" may be used interchangeably.

A mobile station may be referred to as a "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client," or some other appropriate terms in some cases by the skilled person in the art.

At least one of a base station and a mobile station may be referred to as a "transmitting apparatus," a "receiving apparatus," a "communication apparatus," and so on. Note that at least one of a base station and a mobile station may be a device mounted on a moving object or a moving object itself, and so on. The moving object may be a vehicle (for example, a car, an airplane, and the like), may be a moving object which moves unmanned (for example, a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor.

Furthermore, a base station in the present disclosure may be interpreted as a mobile station (user terminal, hereinafter the same). For example, each aspect/embodiment of the present disclosure may be applied to the structure that replaces a communication between a base station and a mobile station with a communication between a plurality of mobile stations (for example, which may be referred to as "Device-to-Device (D2D)," "Vehicle-to-Everything (V2X)," and the like). In this case, the mobile station may have the functions of the base station described above. The words such as "uplink" and "downlink" may be interpreted as the words corresponding to the terminal-to-terminal communication (for example, "sidelink"). For example, an uplink channel, a downlink channel and so on may be interpreted as a sidelink channel.

Likewise, a mobile station in the present disclosure may be interpreted as a base station. In this case, the base station may have the functions of the mobile station described above.

A radio frame may be constituted of one or a plurality of frames in the time domain. Each of one or a plurality of frames may be referred to as a "subframe" in the time domain.

Furthermore, a subframe may be constituted of one or a plurality of slots in the time domain. A subframe may be a fixed time length (for example, 1 ms) independent of numerology.

Numerology may be a communication parameter applied to at least one of transmission and reception of a certain signal or channel. For example, numerology may indicate at least one of a subcarrier spacing (SCS), a bandwidth, a symbol length, a cyclic prefix length, a transmission time interval (TTI), the number of symbols per TTI, a radio frame structure, a specific filter processing performed by a transceiver in the frequency domain, a specific windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot." A mini-slot may be constituted of the number of symbols less than a slot. A PDSCH (or PUSCH) transmitted in a time unit larger than a mini-slot may be referred to as "PDSCH (PUSCH) mapping type A." A PDSCH (or PUSCH) transmitted using a mini-slot may be referred to as "PDSCH (PUSCH) mapping type B."

A radio frame, a subframe, a slot, a mini-slot, and a symbol all express time units in signal communication. A radio frame, a subframe, a slot, a mini-slot, and a symbol may each be called by other applicable terms.

For example, one subframe may be referred to as a "TTI," a plurality of consecutive subframes may be referred to as a "TTI," or one slot or one mini-slot may be referred to as a "TTI." In other words, at least one of a subframe and a TTI may be a subframe (1 ms) in existing LTE, may be a period shorter than 1 ms (for example, 1 to 13 symbols), or may be a period longer than 1 ms. Note that a unit expressing TTI may be referred to as a "slot," a "mini-slot," or the like, instead of a "subframe."

Here, a TTI refers to the minimum time unit of scheduling in radio communication, for example. For example, in LTE systems, a base station performs, for user terminals, scheduling of allocating radio resources (such as a frequency bandwidth and transmit power available for each user terminal) in TTI units. Note that the definition of the TTI is not limited to this.

The TTI may be a transmission time unit for channel-encoded data packets (transport blocks), code blocks, codewords, or the like, or may be a unit of processing in scheduling, link adaptation, or the like. Note that, when a TTI is given, a time interval (for example, the number of symbols) to which transport blocks, code blocks, codewords, or the like are actually mapped may be shorter than the TTI.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI," a "normal subframe," a "long subframe," a "slot," or the like. A TTI that is shorter than a normal TTI may be referred to as a "shortened TTI," a "short TTI," a "partial or fractional TTI," a "shortened subframe," a "short subframe," a "mini-slot," a "sub-slot," a "slot" and so on.

Note that a long TTI (for example, a normal TTI, a subframe, or the like) may be interpreted as a TTI having a time length exceeding 1 ms, and a short TTI (for example, a shortened TTI or the like) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

An RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))," a "sub-carrier group (SCG)," a "resource element group (REG),"a "PRB pair," an "RB pair" and so on.

Furthermore, a resource block may be constituted of one or a plurality of resource elements (REs). For example, one RE may be a radio resource field of one subcarrier and one symbol.

A bandwidth part (BWP) (which may be referred to as a "fractional bandwidth," and so on) may represent a subset of contiguous common resource blocks (common RBs) for certain numerology in a certain carrier. Here, a common RB may be specified by an index of the RB based on the common reference point of the carrier. A PRB may be defined by a certain BWP and may be numbered in the BWP.

The BWP may include a UL BWP (BWP for UL) and a DL BWP (BWP for DL). One or a plurality of BWPs may be configured in one carrier for a UE.

At least one of configured BWPs may be active, and a UE may not need to assume to transmit/receive a certain signal/channel outside the active BWP(s). Note that a "cell," a "carrier," and so on in the present disclosure may be interpreted as a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

The term "connected" or "coupled" or any variation thereof means any direct or indirect connection or connection between two or more elements and may include the presence of one or more intermediate elements between the two elements "connected" or "coupled" with each other. The coupling or connection between the elements may be physical, logical, or a combination thereof. For example, "connection" may be read as "access". As used in the present disclosure, the two elements may be thought of as being "connected" or "coupled" to each other using at least one of one or more wires, cables, and printed electrical connections and, as a number of non-limiting and non-inclusive examples, electromagnetic energy having wavelengths in the radio frequency region, the microwave region, and the light (both visible and invisible) region.

A reference signal may be abbreviated as an "RS," and may be referred to as a "pilot", depending on which standard is applied.

The phrase "based on" as used in the present disclosure does not mean "based only on", unless otherwise specified. **In** other words, the phrase "based on" means both "based only on" and "based at least on".

"Means" included in the configuration of each of the above apparatuses may be replaced by "parts", "circuits", "devices", etc.

Reference to elements with designations such as "first," "second," and so on used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

In the case where the terms "include", "including" and variations thereof are used in the present disclosure, these terms are intended to be comprehensive in the same way as the term "comprising". Further, the term "or" used in the present disclosure is not intended to be an "exclusive or".

In the present disclosure, in the case where an article is added by translation, for example "a", "an", and "the", the disclosure may include that the noun following these articles is plural.

As used in the present disclosure, the term "determining" may encompasses a wide variety of actions. For example, "determining" may be regarded as determining to have performed judging, calculating, computing, processing, deriving, investigating, looking up (looking up, search, inquiry) (e.g., looking up in a table, a database or another data structure), ascertaining and the like. Also, "determining" may be regarded as determining to have performed receiving (e.g., receiving information), transmitting (e.g., transmitting information), inputting, outputting, accessing (e.g., accessing data in a memory) and the like. Also, "determining" may be regarded as determining to have performed resolving, selecting, choosing, establishing, comparing and the like. That is, "determining" may be regarded as determining to have performed some action. Moreover, "determining" may be read as "assuming", "expecting", "considering", and the like.

In this disclosure, the term "A and B are different" may mean "A and B are different from each other." It should be noted that the term "A and B are different" may mean "A and B are different from C." Terms such as "separated" or "combined" may be interpreted in the same way as the "different".

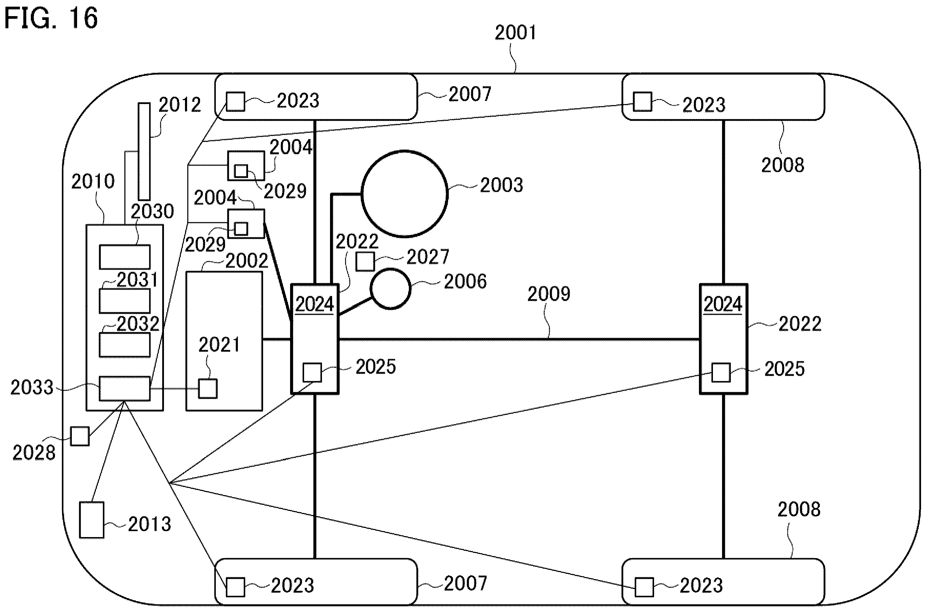

Fig. 16 shows an example of a configuration of a vehicle 2001. As shown in Fig. 16, the vehicle 2001 includes a drive unit 2002, a steering unit 2003, an accelerator pedal 2004, a brake pedal 2005, a shift lever 2006, left and right front wheels 2007, left and right rear wheels 2008, an axle 2009, an electronic control unit 2010, various sensors 2021-2029, an information service unit 2012, and a communication module 2013.

The drive unit 2002 may include, for example, an engine, a motor, and a hybrid of an engine and a motor.

The steering unit 2003 includes at least a steering wheel and is configured to steer at least one of the front wheel or the rear wheel, based on the operation of the steering wheel operated by the user.

The electronic control unit 2010 includes a microprocessor 2031, a memory (ROM, RAM) 2032, and a communication port (IO port) 2033. The electronic control unit 2010 receives signals from the various sensors 2021-29 provided in the vehicle. The electronic control unit 2010 may be referred to as an ECU (Electronic Control Unit).

The signals from the various sensors 2021 to 2028 include a current signal from a current sensor 2021 which senses the current of the motor, a front or rear wheel rotation signal acquired by a revolution sensor 2022, a front or rear wheel pneumatic signal acquired by a pneumatic sensor 2023, a vehicle speed signal acquired by a vehicle speed sensor 2024, an acceleration signal acquired by an acceleration sensor 2025, an accelerator pedal stepped-on amount signal acquired by an accelerator pedal sensor 2029, a brake pedal stepped-on amount signal acquired by a brake pedal sensor 2026, an operation signal of a shift lever acquired by a shift lever sensor 2027, and a detection signal, acquired by an object detection sensor 2028, for detecting an obstacle, a vehicle, a pedestrian, and the like.

The information service unit 2012 includes various devices for providing (outputting) various kinds of information such as driving information, traffic information, and entertainment information, including a car navigation system, an audio system, a speaker, a television, and a radio, and one or more ECUs controlling these devices. The information service unit 2012 provides various types of multimedia information and multimedia services to the occupants of the vehicle 2001 by using information obtained from the external device through the communication module 2013 or the like.

A driving support system unit 2030 includes: various devices for providing functions of preventing accidents and reducing driver's operating loads such as a millimeter wave radar, a LiDAR (Light Detection and Ranging), a camera, a positioning locator (e.g., GNSS, etc.), map information (e.g., high definition (HD) map, autonomous vehicle (AV) map, etc.), a gyro system (e.g., IMU (Inertial Measurement Unit), INS (Inertial Navigation System), etc.), an AI (Artificial Intelligence) chip, an AI processor; and one or more ECUs controlling these devices. In addition, the driving support system unit 2030 transmits and receives various types of information via the communication module 2013 to realize a driving support function or an autonomous driving function.

The communication module 2013 may communicate with the microprocessor 2031 and components of the vehicle 2001 via a communication port. For example, the communication module 2013 transmits and receives data via a communication port 2033, to and from the drive unit 2002, the steering unit 2003, the accelerator pedal 2004, the brake pedal 2005, the shift lever 2006, the left and right front wheels 2007, the left and right rear wheels 2008, the axle 2009, the microprocessor 2031 and the memory (ROM, RAM) 2032 in the electronic control unit 2010, and the sensors 2021 to 2028 provided in the vehicle 2001.

The communication module 2013 is a communication device that can be controlled by the microprocessor 2031 of the electronic control unit 2010 and that is capable of communicating with external devices. For example, various kinds of information are transmitted to and received from external devices through radio communication. The communication module 2013 may be internal to or external to the electronic control unit 2010. The external devices may include, for example, a base station, a mobile station, or the like.

The communication module 2013 transmits a current signal from a current sensor, which is input to the electronic control unit 2010, to external devices through radio communication. Also, the communication module 2013 transmits to external devices through radio communication, a front or rear wheel rotation signal acquired by a revolution sensor 2022, a front or rear wheel pneumatic signal acquired by a pneumatic sensor 2023, a vehicle speed signal acquired by a vehicle speed sensor 2024, an acceleration signal acquired by an acceleration sensor 2025, an accelerator pedal stepped-on amount signal acquired by an accelerator pedal sensor 2029, a brake pedal stepped-on amount signal acquired by a brake pedal sensor 2026, an operation signal of a shift lever acquired by a shift lever sensor 2027, and a detection signal, acquired by an object detection sensor 2028, for detecting an obstacle, a vehicle, a pedestrian, and the like, which are input to the electronic control unit 2010.

The communication module 2013 receives various types of information (traffic information, signal information, inter-vehicle information, etc.) transmitted from the external devices and displays the received information on the information service unit 2012 provided in the vehicle 2001. In addition, the communication module 2013 stores the various types of information received from the external devices in the memory 2032 available to the microprocessor 2031. Based on the information stored in the memory 2032, the microprocessor 2031 may control the drive unit 2002, the steering unit 2003, the accelerator pedal 2004, the brake pedal 2005, the shift lever 2006, the left and right front wheels 2007, the left and right rear wheels 2008, the axle 2009, the sensors 2021-2028, etc., mounted in the vehicle 2001.

As described above, the present disclosure has been described in detail. It is apparent to a person skilled in the art that the present disclosure is not limited to one or more embodiments described in the present disclosure. The present disclosure can be implemented as modifications and variations without departing from the subject matter and the scope of the present disclosure defined by the descriptions of claims. Therefore, the descriptions of the present disclosure are for illustrative purposes only, and are not intended to be any limitations to the present disclosure.

### (Supplementary notes)

The above disclosure may be expressed as follows.

A first feature is a terminal including: a transmitting unit that performs repeated transmission of a physical uplink control channel in response to a conflict resolution message in a random access procedure; and a control unit that identifies more than 16 resources for the repeated transmission indicated by configuration information transmitted from a base station, based on the configuration information.

In the first feature, a second feature is the terminal in which, the configuration information is multiple pieces of configuration information, and each of the multiple pieces of configuration information indicates a different resource set.

In the second feature, a third feature is the terminal in which, the multiple pieces of configuration information are included in the same system information or a different system information.

In the first feature, a fourth feature is the terminal in which, the configuration information is configuration information of one resource set including the more than 16 resources.

In the fourth feature, a fifth feature is the terminal in which, the configuration information of the resource set includes information related to an offset in a frequency direction.

In the fourth feature or the fifth feature, a sixth feature is the terminal in which, the configuration information of the resource set includes a cyclic shift index.

### Reference Signs List

10 Radio communication system
20 NG-RAN
100 gNB
110 Radio signal transmission and reception unit
120 Control unit
150 Relay station
200 UE
210 Radio signal transmission and reception unit
220 Amplifier unit
230 Modulation and demodulation unit
240 Control signal and reference signal processing unit
250 Encoding/decoding unit
260 Data transmission and reception unit
270 Control unit
1001 Processor
1002 Memory
1003 Storage
1004 Communication apparatus
1005 Input apparatus
1006 Output apparatus
1007 Bus
2001 vehicle
2002 Drive unit
2003 Steering unit
2004 Accelerator pedal
2005 Brake pedal
2006 Shift lever
2007 Left and right front wheels
2008 Left and right rear wheels
2009 Axle
2010 Electronic control unit
2012 Information service unit
2013 Communication module
2021 Current sensor
2022 Rotation speed sensor
2023 Pneumatic sensor
2024 Vehicle speed sensor
2025 Acceleration sensor
2026 Brake pedal sensor
2027 Shift lever sensor
2028 Object detection sensor
2029 Accelerator pedal sensor
2030 Driving support system unit
2031 Microprocessor
2032 Memory (ROM, RAM)
2033 Communication port

## Claims

1. A terminal comprising:
a transmitting unit that performs repeated transmission of a physical uplink control channel in response to a conflict resolution message in a random access procedure; and
a control unit that identifies more than 16 resources for the repeated transmission indicated by configuration information transmitted from a base station, based on the configuration information.

2. The terminal according to claim 1, wherein
the configuration information is multiple pieces of configuration information, and each of the multiple pieces of configuration information indicates a different resource set.

3. The terminal according to claim 2, wherein
the multiple pieces of configuration information are included in the same system information or a different system information.

4. The terminal according to claim 1, wherein
the configuration information is configuration information of one resource set including the more than 16 resources.

5. The terminal according to claim 4, wherein
the configuration information of the resource set includes information related to an offset in a frequency direction.

6. The terminal according to claim 4, wherein
the configuration information of the resource set includes a cyclic shift index.
